# EUROPEAN PATENT SPECIFICATION

(11) **EP 2 439 984 B1**
(45) Date of publication and mention of the grant of the patent: **02.09.2015**
(21) Application number: 10290531.2
(22) Date of filing: 05.10.2010
(51) Int. Cl.: H04W 48/12, H04W 72/08, H04W 84/04, H04W 16/10, H04L 5/00

(54) **Interference mitigation on a physical downlink control channel**
Interferenzunterdrückung auf einem physikalischen Abwärtsstrecken-Steuerungskanal
Atténuation d'interférence dans un canal de contrôle physique en liaison descendante

(43) Date of publication of application: 11.04.2012
(73) Proprietor: ALCATEL LUCENT, 92100 Boulogne-Billancourt (FR)
(72) Inventor: Cesar, Bozo, 70439 Stuttgart (DE); Stanze, Oliver, 70499 Stuttgart (DE); Braun, Volker, 70176 Stuttgart (DE); Weber, Andreas, 74251 Lehrensteinfeld (DE)
(74) Representative: Wetzel, Emmanuelle

(56) References cited:
- WO-A1-2009/152866
- US-A1- 2010 020 710
- US-A1- 2010 118 800
- PHILIPS: "Mitigation of Control Channel Interference", 3GPP DRAFT; R1-102252, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419514, [retrieved on 2010-04-06]
- LG ELECTRONICS: "Cell-specific Interleaving for CCE-to-RE mapping", 3GPP DRAFT; R1-072884, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Orlando, USA; 20070621, 21 June 2007 (2007-06-21), XP050106563, [retrieved on 2007-06-21]
- INTEL CORPORATION (UK) LTD: "Non-CA based PDCCH Interference Mitigation in LTE-A", 3GPP DRAFT; R1-102814_EICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 6 May 2010 (2010-05-06), XP050420360, [retrieved on 2010-05-06]
- ALCATEL-LUCENT ET AL: "Technology Issues for Heterogeneous Network for LTE-A", 3GPP DRAFT; R1-093788_HTN_ISSUES_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388306, [retrieved on 2009-10-06]

## Description

### Field of the Invention

The invention relates to the field of telecommunications, and, more specifically, to interference mitigation on a Physical Downlink Control Channel used by a plurality of cells.

### Background

This section introduces aspects that may be helpful in facilitating a better understanding of the invention. Accordingly, the statements of this section are to be read in this light and are not to be understood as admissions about what is in the prior art or what is not in the prior art.

In a heterogeneous network (HetNet) scenario where low power cells such as pico cells, femto cells, or relays are placed inside an area of radio coverage of a macro cell, downlink transmissions on a Physical Downlink Control Channel (PDCCH) are typically used by two or more of the cells in an independent way, leading to collisions/interference "on the air", i.e. on the PDCCH. In the following, it is assumed that the cells are subframe-aligned in time by appropriate means, e.g. GPS, over the air or via a backhaul network.

Now, if control signals from the macro cell and the low power cell(s) collide, this will cause performance degradation for the control signals which will also result in a degradation of the throughput and the quality of service for the user equipments served by the cells. Thus, in such a HetNet scenario, there is a need for improving the combined cells' throughput and the quality of service for the user equipments.

WO 2009/152866 A1 discloses a method and arrangement according to the preamble of claim 1 and of claim 9, respectively.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

The invention relates to a method for mitigating interference on a physical downlink control channel used in an independent way by at least two cells, the method comprising: distributing a number of control channel elements, CCEs, of the physical downlink control channel among the cells, and determining a set of cell identifiers for the cells based on a number of collisions of the physical resources to which the control channel elements are mapped in a downlink sub-frame of the PDCCH, the physical location of the control channel elements in the downlink sub-frame being dependent on the cell identifiers. The determining step comprises selecting a set of cell identifiers which minimizes a number of collisions between resource elements in the sub-frame which are occupied by control channel elements or other downlink signaling of at least two of the cells, and the method further comprises: Based on the distribution of the CCEs of the PDCCH among the cells, determining at least one Radio Network Temporary Identifier, RNTI, for which a high number of PDCCH search spaces for the desired aggregation level is available in the control channel element, CCE, subset assigned to the first cell during the (ten) sub-frames of a radio frame.

To avoid collisions on the Physical Downlink Control Channel (PDCCH) used e.g. by a macro cell and at least one low-power cell, a first part of the available number of (logical) control channel elements (CCEs) of the PDCCH may be attributed exclusively to the macro cell whereas a second part of the CCEs may be attributed exclusively to the one or more low-power cell(s). Typically, interference between two or more low-power cells is low due to their limited transmission power, such that two or more low-power cells may typically share the same CCEs without causing a performance degradation. However, it is also possible to perform the partitioning of the CCEs in a non-orthogonal way, i.e. at least part of the (logical) CCEs may be used by both a macro cell and a low-power cell. The sharing of the same CCEs by two or more of the cells does not necessarily lead to a performance degradation, as the logical CCEs are mapped differently to the physical resources on the PDCCH due to the different cell IDs of the cells

For this reason, performing the attribution in an orthogonal way (i.e. attributing a respective CCE exclusively to only one of the cells) will only avoid collisions of the PDCCHs of the two or more cells (resp. of the PDCCH shared by the two or more cells) if the cell ID of the macro cell and the cell id(s) of the low-power cell(s) are identical. However, in a real system, the cell ID of the macro cell and the cell ID of the low-power cell(s) are typically not allowed to be equal, such that the orthogonal partitioning of the logical CCEs of the PDCCH does not avoid collisions, as the physical location of the CCEs in a sub-frame of the PDCCH is permutated across the available L1/L2 control symbols and also depends on the location of reference signals (RS), Physical Control Format Indicator Channel (PCFICH), Physical Hybrid ARQ Indicator Channel (PHICH) etc. In other words, the location of all the mentioned control signals in a sub-frame and thus the number of collisions depends on the Cell IDs of the involved cells.

As the physical location of the CCEs in a sub-frame of the PDCCH depends on a large number of parameters, the physical location cannot be described by a general mathematical formula, such that it is not possible to analytically calculate a pair / a set of Cell IDs which will avoid collisions for all possible sets of parameters. Therefore, for a given parameter set (used bandwidth, PHICH parameter, number of L1/L2 symbols, distribution of the CCEs between the macro cell and the low power cell, etc. a computer program (algorithm) searches for a pair of cell IDs (or a set of cell IDs when more than two cells are involved) which generates no, or at least a low number of collisions. The computer program may e.g. by implemented as a numerical optimization algorithm for identifying suitable sets of cell identifiers which provide a (possibly local) minimum of the number of collisions. Alternatively, as the number of cell identifiers is limited, the number of collisions may be calculated for all possible combinations of cell identifiers, thus determining one or more sets of cell identifiers which produce a (global) minimum of the number of collisions for a given parameter set.

The determining step comprises selecting a set of cell identifiers which minimizes a number of collisions between resource elements in the sub-frame which are occupied by control channel elements or other downlink signaling of at least two of the cells. As indicated above, the number of collisions of the downlink signaling of different cells should be minimized. For example, a "PDCCH collision" may be defined as follows: If a resource element of a first cell is occupied by part of a PDCCH-CCE, the number of collisions is incremented if the resource element is also occupied by a reference signal (RS), PCFICH, PHICH, or PDCCH-CCE of a second cell.

Regarding the partitioning of the logical CCEs, this may be performed on a static basis and may be signaled from an operation and maintenance unit, or may be negotiated between base stations involving signaling, e.g. over an X2 interface. As there may be several low-power cells placed inside a macro cell, typically the low-power cells receive the PDCCH partitioning information from the macro cell, the low-power cells possibly using the same CCEs, as their mutual interference is low.

As indicated above, the method further comprises: Based on the distribution of control channel elements of the Physical Downlink Control Channel among the cells, determining at least one user equipment identifier in the form of a Radio Network Temporary Identifier for which a high number of PDCCH search spaces for the desired aggregation level is available in the control channel element, CCE, subset assigned to the first cell during the (ten) sub-frames of a radio frame. This allows transmissions with a desired aggregation level of the control channel elements assigned to the (first) cell in a maximum number of sub-frames of a radio frame of the PDCCH.

The aggregation level designates the number of CCEs used for transmissions on a particular PDCCH and is selected by the base station depending on the channel conditions. In the 3GPP Rel8 (LTE advanced) standard, each terminal (user equipment) is characterized by a Radio Network Temporary Identifier (RNTI). The CCEs which can be used by a user equipment in a sub-frame of a radio frame, called "the PDCCH search space", depend on the RNTI, the sub-frame number (ranging e.g. from 0 to 9), and the aggregation level.

As the total number of available CCEs is distributed between the macro cell and the low power cell(s), only part of the overall number of CCEs is typically available in each cell, such that adequate RNTI values for the desired aggregation level have to be found for each cell. As indicated above, the PDCCH search spaces for a RNTI depend on the sub-frame number, i.e. vary during a radio frame. To find adequate RNTI values, a computer program / algorithm searches RNTI values for which a high number of PDCCH search spaces for the desired aggregation level(s) is available in the PDCCH CCE subset assigned to the cell during the ten sub-frames of the radio frame. Such preferred RNTI values may be pre-computed during cell setup, or may be computed during radio link setup.

In one variant, the method further comprises: assigning at least one cell identifier of the determined set of cell identifiers to at least one of the cells for performing transmissions on the PDCCH. The determination of suitable sets of cell IDs and the assignment of the determined cell identifier(s) to the cell(s) may be performed by different physical entities.

In a further variant, the method further comprises: changing the distribution of the control channel elements among the cells in dependence of a traffic distribution within the cells. The distribution of the logical CCEs to the cells may also be changed on a semi-static basis depending on the traffic and user distributions (e.g. SON algorithms), providing more CCEs to a cell which has to serve a large number of users and less CCEs to a cell which has to serve only a small number of users and/or selecting a distribution which minimizes collisions. One advantage of changing the assignment is that no change of the cell IDs is required for this purpose. It will be understood, however, that it may also be possible to change the cell IDs. For instance, the cell ID of the low-power cell could be changed if there are no (or possibly only few users) served by the low-power cell.

In one variant, the method further comprises: depending on a load condition of a cell, using the control channel elements of a sub-frame which are attributed to the cell by another cell. In particular, depending on a load condition of a low-power cell, the CCEs of a sub-frame which are attributed to the low-power cell may be used by a macro cell. In this way, a simple load-dependent partitioning solution can be provided, as the partitioning of the logical CCEs is defined on a static basis in each cell, but a first cell (typically the macro cell) may use CCEs (or transmit w/o power reduction on CCEs) that are reserved for a second cell (typically the low-power cell) in case that the first cell is aware that the second cell has low load or no users. To enable such a solution, the second cell (typically the low-power cell), will signal load information to the first cell, e.g. over an X2 interface.

One skilled in the art will appreciate that although in the above examples, signaling over an X2 interface has been described, in a macro-diversity scenario beyond LTE Rel10, a user equipment may have simultaneous links to multiple cells. In such a case, the X2 signaling could be replaced by over-the-air signaling from the first cell to the second cell via the user equipment.

In another variant, one of the cells is a macro cell and another cell is a low-power cell, in particular a pico cell. In the present context, the term "pico cell" relates to a low-power, open-subscriber cell. A low-power cell has less available transmission power than a macro cell, such that the area of radio coverage of the low-power cell is typically considerably smaller than the area of radio coverage of the macro cell. As indicated above, the low-power cell and the macro cell have an at least partially overlapping area of radio coverage, the low-power cell being used to increase the area of radio coverage of the macro cell (or vice versa), either by extending the area of radio coverage of the macro cell as a whole or by enhancing the quality of service in local areas inside the area of radio coverage of the macro cell, e.g. in buildings. However, it will be understood that the invention is not limited to the case of a heterogeneous network having macro cells and low-power cells, as the invention may be applied to all cells which have a (partially) overlapping area of radio coverage.

In a further variant, the cells are part of a radio network in compliance with the LTE (advanced) standard (LTE Rel8). As indicated above, LTE Rel8 does not support Inter-Cell Interference Coordination (ICIC) for the control signals on the PDCCH, such that interference mitigation provided by the method as described herein is particularly beneficial.

Another aspect relates to a computer program product which is adapted for performing all the steps of the method as described above when said program is run on an electronic device. Such a computer program product may be implemented as a suitable hardware and/or software.

A further aspect relates to an arrangement for interference mitigation on a physical downlink control channel which is used in an independent way by at least two cells, comprising: a distribution unit adapted for distributing a number of control channel elements of the physical downlink control channel among the cells, a determining unit adapted for determining a set of cell identifiers for the cells based on a number of collisions of physical resources to which the control channel elements are mapped in a downlink sub-frame of the physical downlink control channel, the physical location of the control channel elements in the downlink sub-frame being dependent on the cell identifiers. The determining unit is adapted to select a set of cell identifiers which minimizes a number of collisions between resource elements in the sub-frame which are occupied by CCEs or other downlink signaling of at least two of the cells. The arrangement further comprises an assignment unit for assigning at least one cell identifier of the determined set to at least one of the cells for performing transmissions on the PDCCH, the assignment unit being adapted to determine at least one user equipment identifier in the form of Radio Network Temporary Identifier, RNTI, for which a high number of PDCCH search spaces for the desired aggregation level is available in the control channel element, CCE, subset assigned to the first cell during the (ten) sub-frames of a radio frame. As indicated above, due to the fact that only a part of the total number of CCEs is available in each cell, adequate RNTI values for the desired aggregation level have to be found for each cell.

The above arrangement may be used to determine suitable sets of cell identifiers, it being understood that the cell identifiers are attributed to the cells in a unique way, i.e. the same cell identifier may not be attributed to two different cells. The assignment unit may be adapted to provide appropriate signaling indicating the cell ID to a base station of one of the cells, e.g. via an X2 interface. Of course, when the arrangement is implemented in a base station of a cell, the assignment unit may perform the assignment of its own cell ID directly, i.e. without signaling.

As indicated above, the determining unit is adapted to select a set of cell identifiers which minimizes a number of collisions between resource elements in the sub-frame which are occupied by control channel elements or by other downlink signaling of at least two of the cells. As stated above, the collisions may lead to a performance (throughput / QoS) degradation which can be reduced / avoided in the way described above. By avoiding / reducing such collisions, the area of radio coverage of the low-power cell and/or of the macro cell can also be enhanced.

The arrangement as described above may be implemented in at least one of a base station, a network controller, a gateway, and an operation and maintenance unit of a radio network. Although the entire arrangement may be implemented in a single physical device, e.g. a base station, the different units of the arrangement are typically distributed over two or more physical devices arranged at different locations. In this respect, it should be noted that although the PDCCH is only established on the air interface between the base stations and the user equipments of the cells, the distribution of the available cell identifiers to the cells and/or the determination of suitable sets of cell IDs may be performed at a remote location, e.g. in a network controller or an O&M unit. It will also be understood that when a plurality of macro cells interfere with a low-power cell, the macro cell causing the major interference contribution may be determined and only this specific macro cell may be used for the determination of an appropriate set of cell IDs. For instance, information about the macro cell which causes the major interference contribution may be exchanged e.g. over an X2 interface. Of course, the distribution of channel control elements may alternatively be performed between the low-power cell and two or more, possibly all interfering macro cells.

A further aspect of the invention relates to a heterogeneous network, in particular in compliance with the LTE standard, comprising: a macro cell and at least one low-power cell, in particular a pico (open-subscriber) cell, the macro cell and the at least one low-power cell using a physical downlink control channel in an independent way, and at least one arrangement of the type described above for interference mitigation on the physical downlink control channel. In particular for networks in which the physical downlink control channel is not provided with inter-cell interference coordination mechanisms (e.g. in compliance with LTE Rel8), the solution described above may considerably improve the PDCCH performance. One skilled in the art will appreciate that the principles described herein are not restricted to low-power cells in the form of open-subscriber ("pico") cells, an that these principles may be applied to closed-subscriber ("femto") cells as well.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1**: shows a schematic diagram of a heterogeneous network with a macro cell and a low-power cell,
- **Fig. 2a**: shows a schematic diagram of a logical assignment of PDCCH CCEs to the macro cell and to the low-power cell of Fig. 1,
- **Fig. 2b**: shows a schematic diagram of the location of specific ones of the PDCCH CCEs in a sub-frame of a radio frame of the PDCCH,
- **Fig. 3**: shows a detail of a collision-matrix representing the number of PDCCH collisions in dependence of the cell IDs of the two cells of Fig. 1,
- **Fig. 4**: shows a minimum/maximum number of PDCCH collisions for each value of the cell ID of the first cell, and
- **Fig. 5**: shows in which sub-frames of a radio frame a specific user equipment may use a specific aggregation level.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

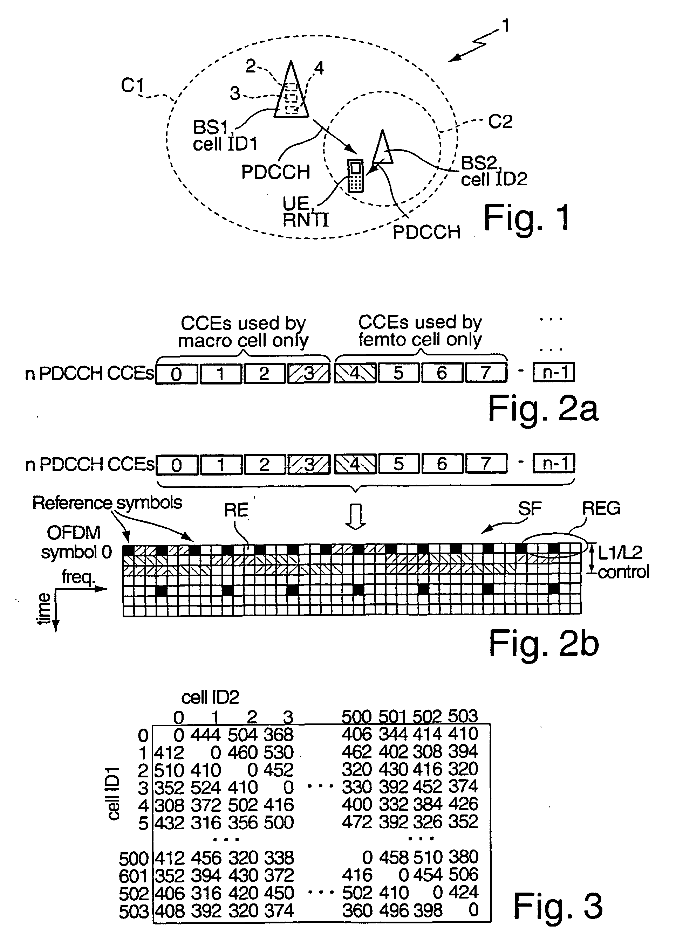

**Fig. 1** shows a heterogeneous network 1 in compliance with the LTE Re18 standard, having a first cell C1 in the form of a macro cell with a first base station BS1 for generating a large area of radio coverage and a second cell C2 in the form of a low-power (e.g. pico) cell having a second base station BS2 for generating a smaller area of radio coverage. The area of radio coverage of the second cell C2 is located outdoors or indoors, e.g. inside of a building, and is entirely contained in the area of radio coverage of the first cell C1. The second cell C2 serves to enhance QoS and throughput for user equipments UE present inside its area of radio coverage for which access to the network 1 would otherwise be limited or unavailable.

The user equipment UE in the area of radio coverage of the second cell C2 receives downlink transmissions from both the first and the second base station BS1, BS2, the downlink transmissions comprising downlink signaling in the form of control channel elements on a Physical Downlink Control Channel PDCCH, as indicated in **Fig. 2a****.** Inter-Cell Interference Coordination (ICIC) for the control signals is not supported in the LTE Re18 standard. Therefore, collisions between the control channel elements of the different cells C1, C2 may occur, leading to a degradation of QoS and throughput in transmissions to the user equipment UE. A mechanism for solving this problem, i.e. for reducing the number of collisions, will be described in the following.

The number of available control channel elements (cf. **Fig. 2a**) depends on the specific transmission characteristics of the network 1. For example, for a bandwidth of 10 MHz, a number of three L1/L2 symbols, a number of two Tx antennas, and a PHICH Ng of 1 which results in a number of seven PHICH groups, a number n of available control channel elements CCE on the physical downlink control channel PDCCH is forty-one.

For reducing interference on the Physical Downlink Control Channel PDCCH, the available forty-one control channel elements CCE are partitioned between the first cell C1 and the second cell C2 using a distribution unit 2 arranged in the first base station BS1. In the example of Fig. 2a, the first four CCE numbers 0-3 are assigned to the first cell C1, whereas the second four CCE numbers 4-7 are assigned to the second cell C2.

However, only if the Cell IDs of the macro cell C1 and of the low-power cell C2 are identical, this would avoid collisions in the Physical Downlink Control Channel PDCCH of the two cells C1, C2 in the available L1/L2 control symbols in a sub-frame SF as shown in **Fig. 2b****.** However, in a real system, the Cell IDs of the macro cell C1 and of the low-power (pico) cell C2 are not allowed to be equal. Therefore, the orthogonal partitioning of the logical control channel elements CCE shown in Fig. 2a does not avoid collisions, as the physical location of the CCEs (indicated in Fig. 2b for CCE number 3 and CCE number 4) in a sub-frame SF is permutated across the available L1/L2 control symbols and depends e.g. on the location of the reference symbols, PCFICH, and PHICH in the sub-frame SF. Furthermore, the location of the reference symbols depends on the number of Tx antennas. In the present example, two Tx antennas are used which leads to a reference symbol in every third resource element RE of OFDM symbol 0 of the sub-frame SF shown in Fig. 2b. Moreover, the location of all further downlink control signals mentioned above depends on the Cell ID of the respective cell C1, C2.

As the orthogonal partitioning (i.e. attribution of each logical CCE to exactly one cell) does not avoid collisions due to the different physical locations of the logical CCEs in a sub-frame SF, it is also possible that one or more CCEs are attributed to two or more cells (non-orthogonal partitioning).

Moreover, as the physical location of the control channel elements CCE in a sub-frame SF is different for each set of transmission parameters, their location cannot be described by a general mathematical formula. Therefore, it is not possible to analytically calculate a pair of Cell IDs which will avoid collisions for each possible set of transmission parameters.

Consequently, for a given parameter set (used bandwidth, PHICH parameter, number of L1/L2 symbols, distribution of the CCEs between the macro cell and the low power cell, number of Tx antennas etc.), a determining unit 3 of the first base station BS1 determines a suitable set of cell identifiers cell ID1, cell ID2 for the cells C1, C2 which has a small (minimum) number of collisions of the control channel elements CCE in the downlink sub-frame SF attributed to the different cells C1, C2. For this purpose, an algorithm is used which searches for a pair of Cell IDs (or a set of Cell IDs in case of three or more cells) which generates no, or at least a low number of collisions.

In the following example, CCE numbers 0-7, 16-23, and 32-35 are assigned to the first cell C1, whereas CCE numbers 8-15, 24-31 and 36-39 are assigned to the second cell C2. In other words, for each cell C1, C2, twenty control channel elements CCEs (corresponding to 20*9*4 = 720 resource elements RE in a downlink sub-frame SF) are reserved. For the given attribution of the control channel elements CCE to the cells C1, C2, the algorithm calculates the structure (physical location) of the L1/L2 control symbols for each combination of cell IDs for the first cell C1 (cell ID1) and the second cell C2 (cell ID2). In this way, a collision-matrix with 504x504 values containing "number of PDCCH collision" values is calculated, as represented in **Fig. 3****.** In this respect, it should be noted that the number of cell IDs available in the LTE Re18 standard is limited to 504. The desired cell ID pairs (or cell ID sets) having a low number of collisions may be extracted from the collision-matrix of Fig. 3.

The "PDCCH collision" which is represented in the collision-matrix of Fig. 3 has been defined as follows: If a resource element RE in the first cell C1 is occupied by a part of a control channel element CCE of the Physical Downlink Control Channel PDCCH, then the number of collisions is incremented if the resource element RE is also occupied by a reference symbol RS, PCFICH, PHICH, or by a control channel element CCE of the second cell C2.

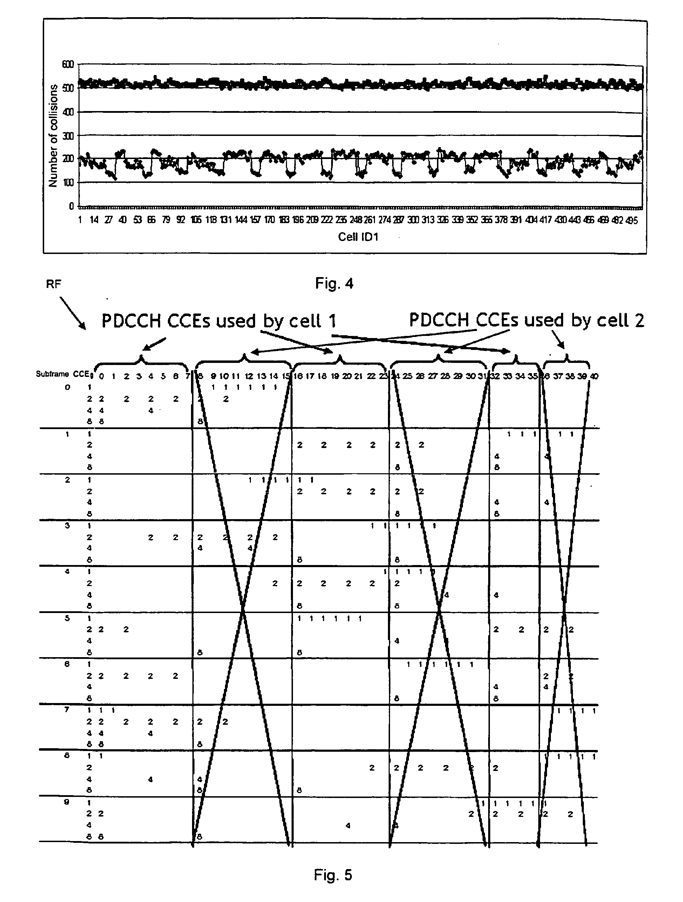

For each possible value of the cell identifier "cell ID1" of the first cell C1, **Fig. 4** shows the minimum number of collisions in the lower graph and the maximum number of collisions in the upper graph. In other words, the lower graph shows the number of collisions when selecting a "good" cell ID for the second cell C2, whereas the upper graph represents the case when selecting a "bad" cell ID for the second cell C2. The comparison of the upper and the lower graph shows how important it is to carefully select a suitable pair of cell identifiers (cell ID1, cell ID2) for the first and the second cell C1, C2. However, Fig. 4 also shows that collisions cannot be entirely avoided for the selected parameters.

Once a suitable pair of cell identifiers "cell ID1", "cell ID2" has been selected, an assignment unit 4 of the first base station BS1 assigns the first cell identifier "cell ID1" to the first cell C1 and uses signaling, e.g. over an X2 interface, to the second base station BS2, informing the latter about the second cell identifier "Cell ID2".

Once the cell identifiers "Cell ID1, Cell ID2" have been attributed to the cells C1, C2, suitable user equipment identifiers have to be attributed to the user equipments UE served by the cells C1, C2. In the present example of an LTE network 1, the user equipment identifier is a Radio Network Temporary Identifier (RNTI) which is selected from a range of e.g. 1000 possible values.

The control channel elements CCE which can be used for a user equipment UE in a sub-frame SF of a radio frame (see Fig. 5) called "the PDCCH search space" depend on the user equipment identifier (in the following: "RNTI") assigned to the user equipment UE, the sub-frame number (ranging from 0 to 9 in the present example of an LTE Re18 network), and the aggregation level.

The aggregation level designates the number of control channel elements CCE used for transmissions on a particular PDCCH and is selected by a respective base station BS1, BS2 depending on the channel conditions. As the total number of available control channel elements CCE is distributed between the macro cell C1 and the low-power cell C2, only part of the overall number of control channel elements CCE is available in each cell C1, C2, such that adequate RNTI values for the desired aggregation level have to be found for each cell C1, C2.

As indicated above, the "PDCCH search spaces" for a specific RNTI depend on the sub-frame number, i.e. vary during the radio frame RF shown in Fig. 5. To find adequate RNTI values for user equipments of the first cell C1, the assignment unit 4 searches RNTI values for which a high (maximum) number of PDCCH search spaces for the desired aggregation level(s) is/are available in the control channel element CCE subset assigned to the first cell C1 during the ten sub-frames of the radio frame RF. Such preferred RNTI values may be pre-computed during cell setup, or may be computed during radio link setup for later use in communications with the user equipments UE served by the respective base station BS1, BS2.

**Fig. 5** shows the aggregation levels which can be used by a user equipment in the first cell C1 which has a user equipment identifier RNTI = 100. The aggregation level designates the number of successive CCEs which are attributed to the specific user equipment identifier RNTI=100 in a respective sub-frame #0 to #9. The numbers (2, 4, and 8) in the column below a specific CCE designate the number of successive CCEs which can be occupied in that specific sub-frame #0 to #9. For instance, the number "8" in the column below CCE#0 in sub-frame #0 indicates that CCEs #0 to #7 can be occupied in subframe #0 (aggregation layer 8). Alternatively, aggregation level 4 may be used (CCEs #0 to #3 or CCEs #4 to #7), or aggregation level 2 may be used (CCEs #0 and #1, etc.). However, although aggregation layer 1, 2, and 8 are in principle also available for CCEs # 8 to #15 of sub-frame #0, these cannot be used, as CCEs # 8 to #15 are not attributed to the first cell C1.

The user equipment may use aggregation layer 8 in seven sub-frames of the radio frame RF and may use aggregation layer 4 in eight sub-frames of the radio frame RF. In other words, a user equipment in the first cell C1 with RNTI=100 cannot use aggregation layer 8 in three sub-frames (namely in sub-frames 1, 2, and 6 of the radio frame RF and cannot use aggregation layer 4 in two sub-frames (3 and 5) of the radio frame RF. In the example of Fig. 5 where CCE numbers 0-7, 16-23, and 32-35 are assigned to the first cell C1, 409 of the RNTI numbers between 1 and 1000 provide at least eight search spaces for aggregation level 4 and at least eight search spaces for aggregation level 8 during the ten sub-frames of the radio frame RF.

In the way described above, the assignment unit 4 searches for a set of RNTI values for the first cell C1 which provides a maximum number of usable search spaces (for example, with a maximum number of sub-frames with the highest aggregation level (AL 8)). The RNTI values are then attributed to the user equipments which are served by the first cell C1. In a similar way, an assignment unit (not shown) of the second base station BS2 searches for a set of user identifiers (RNTI values) which provide a maximum number of usable search spaces for the desired aggregation layer(s) of the user equipments UE served by the second cell C2.

Although in the example given above algorithms for computing suitable cell IDs and for computing suitable RNTIs are performed in the base station BS1, these algorithms may also be executed in an operation and maintenance unit, a network controller / gateway or in another base station (e.g. base station BS2). When the algorithms are performed in the second base station BS2 of a low-power cell C2 which interferes with two or more macro cells, the second base station BS2 has to be aware of the cell ID of the macro cell C1 causing the major interference contribution, e.g. via signaling over an X2 interface. One skilled in the art will appreciate that although algorithms for computing suitable RNTIs of user equipments may also be performed in any location of the network, these algorithms are preferably executed by the base station which is used for serving those user equipments.

The partitioning of the logical control channel elements CCE may be defined on a static basis and may be signaled from an operation and maintenance unit (not shown), or it may be negotiated between base stations involving signaling over an X2 interface. As there may be several low-power cells placed inside a macro cell, typically the low-power cells will receive the PDCCH partitioning information from the macro cell.

However, the partitioning of the logical control channel elements CCE may also be done on a semi-static basis depending on the traffic and user distributions (e.g. Self-Organizing Network (SON) algorithms). Alternatively, the cell IDs may be changed. For instance, the cell ID of the low-power cell C2 could be changed if there are no or only few users attached to the low-power cell C2.

A simpler load-dependent partitioning solution can be provided by partitioning of the logical control channel elements CCE on a static basis in each cell, but a first cell C1 (in the present case, the macro cell) may nevertheless use control channel elements CCE (or transmit w/o power reduction on control channel elements CCEs) that are reserved for a second cell C2 (in the present case, the low-power cell) in case that the first cell C1 is aware that the second cell C2 has low load or no users. To enable such a solution, the second cell C2 shall signal the load information to the first cell C1, e.g. over an X2 interface.

In the way described above, interference on the physical downlink control channel in HetNet deployments may be reduced. In turn, this may enable to increase the coverage area of the low-power cell which has great impact on the HetNet throughput performance.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for mitigating interference on a physical downlink control channel, PDCCH, used in an independent way by at least two cells (C1, C2), the method comprising:
distributing a number of control channel elements, CCE, of the PDCCH among the cells (C1, C2), and
determining a set of cell identifiers (cell ID1, cell ID2) for the cells (C1, C2) based on a number of collisions of the physical resources to which the CCEs are mapped in a downlink sub-frame (SF) of the PDCCH, the physical location of the CCEs in the downlink sub-frame (SF) being dependent on the cell identifiers (cell ID1, cell ID2), the method **characterized in that**:
the determining step comprises selecting a set of cell identifiers (cell ID1, cell ID2) which minimizes a number of collisions between resource elements (RE) in the sub-frame (SF) which are occupied by CCEs or other downlink signaling of at least two of the cells (C1, C2), and **in that** based on the distribution of the CCEs of the PDCCH among the cells (C1, C2), determining at least one Radio Network Temporary Identifier, RNTI, for which a high number of PDCCH search spaces for the desired aggregation level is available in the control channel element, CCE, subset assigned to the first cell (C1) during the sub-frames (SF) of a radio frame RF.

2. Method according to claim 1, further comprising:
assigning at least one cell identifier (cell ID2) of the determined set of cell identifiers (cell ID1, cell ID2) to at least one of the cells (C2) for performing transmissions on the PDCCH.

3. Method according to any one of the preceding claims, further comprising:
changing the distribution of the CCEs among the cells (C1, C2) in dependence of a traffic distribution within the cells (C1, C2).

4. Method according to any one of the preceding claims, further comprising:
depending on a load condition of a cell, using the CCEs of a sub-frame (SF) which are attributed to the cell (C2) by another cell.

5. Method according to claim 4, wherein, depending on a load condition of a low-power cell (C2), the CCEs of a sub-frame (SR) which are attributed to the low-power cell (C2) are used by a macro cell (C1).

6. Method according to any one of the preceding claims, wherein one of the cells is a macro cell (C1) and another cell is a low-power cell (C2).

7. Method according to any one of the preceding claims, wherein the cells (C1, C2) are part of a radio network (1) in compliance with the LTE standard.

8. Computer program product adapted to perform all the steps of the method according to any one of the preceding claims when said program is run on an electronic device.

9. Arrangement (BS1) for interference mitigation on a PDCCH used in an independent way by at least two cells (C1, C2), comprising:
a distribution unit (2) adapted for distributing a number (n) of CCEs of the PDCCH among the cells (C1, C2),
a determining unit (3) adapted for determining a set of cell identifiers (cell ID1, cell ID2) for the cells (C1, C2) based on a number of collisions of physical resources to which the CCEs are mapped in a downlink sub-frame (SF) of the PDCCH, the physical location of the CCEs in the downlink sub-frame (SF) being dependent on the cell identifiers (cell ID1, cell ID2), and
an assignment unit (4) for assigning at least one cell identifier (cell ID1) of the determined set (cell ID1, cell ID2) to at least one of the cells (C1) for performing transmissions on the PDCCH,
**characterized in that**
the determining unit (3) is adapted to select a set of cell identifiers (cell ID1, cell ID2) which minimizes a number of collisions between resource elements (RE) in the sub-frame (SF) which are occupied by CCEs or other downlink signaling of at least two of the cells (C1, C2), and
the assignment unit (4), based on the distribution of the CCEs of the PDCCH among the cells (C1, C2), is adapted to determine at least one Radio Network Temporary Identifier, RNTI, for which a high number of PDCCH search spaces for the desired aggregation level is available in the control channel element, CCE, subset assigned to the first cell (C1) during the sub-frames (SF) of a radio frame RF.

10. Arrangement according to claim 9, being implemented in at least one of a base station (BS1), a network controller, a gateway, and an operation and maintenance unit of a radio network (1).

11. A heterogeneous network (1), comprising:
a macro cell (C1) and at least one low-power cell (C2), the macro cell (C1) and the at least one low-power cell (C2) using a PDCCH in an independent way, and
at least one arrangement (BS1) according to any one of claims 9 or 10 for interference mitigation on the PDCCH.

## Patentansprüche

1. Verfahren für Minderung von Störungen eines physischen Downlink-Kontrollkanals, PDCCH, der auf unabhängige Art von mindestens zwei Zellen (C1, C2) benutzt wird, wobei das Verfahren umfasst:
das Verteilen einer Anzahl von Kontrollkanalemementen, CCE, des PDCCH unter den Zellen (C1, C2), und
das Bestimmen eines Satzes von Zellkennungen (Zell-ID1, Zell-ID2) für die Zellen (C1, C2), auf der Grundlage einer Anzahl von Kollisionen der physischen Ressourcen, denen die CCEs in einem Downlink-Unterrahmen (SF) des PDCCH zugeordnet sind, wobei die physische Position der CCEs in dem Downlink-Unterrahmens (SF) von den Zellkennungen (Zell-ID1, Zell-ID2) abhängig ist, wobei das Verfahren **dadurch gekennzeichnet ist dass**:
der Bestimmungsschritt das Auswählen eines Sets von Zellkennungen (Zell-ID1, Zell-ID2) umfasst, welches die Anzahl der Kollisionen zwischen Ressourceelementen (RE) in den Unterrahmen (SF) minimiert, welche von den CCEs oder anderen Downlink-Signalisierungen der Zellen (C1, C2) belegt sind, sowie dadurch, dass auf der Grundlage der Verteilung der CCEs des PDCCH auf die Zellen (C1, C2) die Bestimmung von mindestens einer temporären Funknetzwerk-Kennung, RNTI, erfolgt, für welche in dem im Verlauf der Unterrahmen (SF) eines Funkrahmens (RF) der ersten Zelle (C1) zugewiesenen Teilsatz von Kontrollkanalelementen (CCE) eine große Zahl von PDCCH-Suchräumen für die gewünschte Bündelungsebene verfügbar ist.

2. Verfahren nach Anspruch 1, weiterhin umfassend:
das Zuordnen von mindestens einer Zellkennung (Zell-ID2) des bestimmten Satzes von Zellkennungen (Zell-ID1, Zell-ID2) zu mindestens einer der Zellen (C2) zum Ausführen von Übertragungen auf dem PDCCH.

3. Verfahren nach jeglichem der vorangehenden Ansprüche, weiterhin umfassend:
das Verändern der Verteilung der CCEs auf die Zellen (C1, C2) in Abhängigkeit der Trafficverteilung unter den Zellen (C1, C2).

4. Verfahren nach jeglichem der vorangehenden Ansprüche, weiterhin umfassend: in Abhängigkeit von der Lastbedingung der Zelle die Benutzung der CCEs eines Unterrahmens (SF), die der Zelle (C2) durch eine andere Zelle zugeordnet sind.

5. Verfahren nach Anspruch 4, wobei in Abhängigkeit von einer Ladebedingung einer Niedrigleistungs-Zelle (C2) die CCEs eines Unterrahmens (SR), die der Niedrigleistungs-Zelle (C2) zugeordnet sind, von einer Makrozelle (C1) benutzt werden.

6. Verfahren nach jeglichem der vorangehenden Ansprüche, wobei eine der Zellen eine Makrozelle (C1) und eine weitere Zelle eine Niedrigleistungs-Zelle (C2) ist.

7. Verfahren nach jeglichem der vorangehenden Ansprüche, wobei die Zellen (C1, C2) Teil eines Funknetzwerks (1) gemäß LTE-Standard sind.

8. Computerprogramm-Produkt, ausgelegt für das Ausführen aller Schritte des Verfahrens nach jeglichem der vorangehenden Ansprüche, wenn besagtes Programm auf einem EDV-Gerät ausgeführt wird.

9. Anordnung (BS1) für die Störungsminderung auf einem PDCCH, der auf unabhängige Art von mindestens zwei Zellen (C1, C2) benutzt wird, umfassend:
eine Verteilereinheit (2), ausgelegt für das Verteilen einer Anzahl (n) von CCEs des PDCCH unter den Zellen (C1, C2),
eine Bestimmungseinheit (3) für das Bestimmen eines Satzes von Zellkennungen (Zell-ID1, Zell-ID2) für die Zellen (C1, C2), auf der Grundlage einer Anzahl von Kollisionen der physischen Ressourcen, denen die CCEs in einem Downlink-Unterrahmen (SF) des PDCCH zugeordnet sind, wobei die physische Position der CCEs in dem Downlink-Unterrahmens (SF) von den Zellkennungen (Zell-ID1, Zell-ID2) abhängig ist, und
eine Zuordnungseinheit (4) für das Zuordnen von mindestens einer Zellkennung (Zell-ID1) des bestimmten Satzes von Zellkennungen (Zell-ID1, Zell-ID2) zu mindestens einer der Zellen (C1) zum Ausführen von Übertragungen auf dem PDCCH,
**dadurch gekennzeichnet, dass**
die Bestimmungseinheit (3) ausgelegt ist für das Auswählen eines Sets von Zellkennungen (Zell-ID1, Zell-ID2), welches die Anzahl der Kollisionen zwischen Ressourceelementen (RE) in den Unterrahmen (SF) minimiert, welche von den CCEs oder anderen Downlink-Signalisierungen der Zellen (C1, C2) belegt sind,
die Zuordnungseinheit (4) auf der Grundlage der Verteilung der CCEs des PDCCH auf die Zellen (C1, C2) ausgelegt ist für das Bestimmen mindestens einer temporären Funknetzwerk-Kennung, RNTI, für welche in dem im Verlauf der Unterrahmen (SF) eines Funkrahmens (RF) der ersten Zelle (C1) zugewiesenen Teilsatz von Kontrollkanalelementen, CCE, eine große Zahl von PDCCH-Suchräumen für die gewünschte Bündelungsebene verfügbar ist.

10. Anordnung nach Anspruch 9, implementiert in mindestens einer der folgenden Vorrichtungen: einer Basisstation (BS1), einer Netzwerksteuerung, einem Gateway oder einer Betriebs- und Wartungseinheit eines Funknetzwerks (1).

11. Ein heterogenes Netzwerk (1), umfassend:
eine Makrozelle (C1) und mindestens eine Niedrigleistungs-Zelle (C2), wobei die Makrozelle (C1) und die mindestens eine Niedrigleistungs-Zelle (C2) einen PDCCH unabhängig voneinander benutzen, und
mindestens eine Anordnung (BS1) nach einem jeglichen der Ansprüche 9 oder 10 für die Störungsminderung auf dem PDCCH.

## Revendications

1. Procédé d'atténuation des interférences sur un canal de commande de liaison descendante physique, PDCCH, utilisé de manière indépendante par au moins deux cellules (C1, C2), le procédé comprenant :
distribution d'un nombre donné d'éléments de canal de commande, CCE, du PDCCH parmi les cellules (C1, C2), et
détermination d'un ensemble d'identificateurs de cellule (ID1 de cellule, ID2 de cellule) pour les cellules (C1, C2) en se basant sur un nombre de collisions des ressources physiques avec lesquelles sont mis en correspondance les CCE dans une sous-trame (SF) de liaison descendante du PDCCH, l'emplacement physique des CCE dans la sous-trame (SF) de liaison descendante étant dépendant des identificateurs de cellule (ID1 de cellule, ID2 de cellule), le procédé étant **caractérisé en ce que** :
l'étape de détermination comprend la sélection d'un ensemble d'identificateurs de cellule (ID1 de cellule, ID2 de cellule) qui minimise un nombre de collisions entre des éléments de ressource (RE) dans la sous-trame (SF) qui sont occupés par des CCE ou une autre signalisation de liaison descendante d'au moins deux des cellules (C1, C2), et **en ce que**, en se basant sur la distribution des CCE du PDCCH parmi les cellules (C1, C2), détermination d'au moins un identificateur temporaire de réseau radioélectrique, RNTI, pour lequel un nombre élevé d'espaces de recherche de PDCCH est disponible pour le niveau d'agrégation souhaité dans le sous-ensemble d'éléments de canal de commande, CCE, assigné à la première cellule (C1) pendant les sous-trames (SF) d'une trame radioélectrique, RF.

2. Procédé selon la revendication 1, comprenant en outre :
assignation d'au moins un identificateur de cellule (ID2 de cellule) de l'ensemble déterminé d'identificateurs de cellule (ID1 de cellule, ID2 de cellule) à au moins l'une des cellules (C2) pour réaliser des transmissions sur le PDCCH.

3. Procédé selon l'une quelconque des revendications précédentes, comprenant en outre: modification de la distribution des CCE parmi les cellules (C1, C2) en fonction d'une distribution du trafic à l'intérieur des cellules (C1, C2).

4. Procédé selon l'une quelconque des revendications précédentes, comprenant en outre : suivant une condition de charge d'une cellule, utilisation des CCE d'une sous-trame (SF) qui sont attribués à la cellule (C2) par une autre cellule.

5. Procédé selon la revendication 4, selon lequel, suivant une condition de charge d'une cellule de faible puissance (C2), les CCE d'une sous-trame (SR) qui sont attribués à la cellule de faible puissance (C2) sont utilisés par une macro cellule (C1).

6. Procédé selon l'une quelconque des revendications précédentes, selon lequel l'une des cellules est une macro cellule (C1) et l'autre cellule est une cellule de faible puissance (C2).

7. Procédé selon l'une quelconque des revendications précédentes, selon lequel les cellules (C1, C2) font partie d'un réseau radioélectrique (1) conforme à la norme LTE.

8. Produit de programme informatique adapté pour exécuter toutes les étapes du procédé selon l'une quelconque des revendications précédentes lorsque ledit programme est exécuté sur un dispositif électronique.

9. Arrangement (BS1) d'atténuation des interférences sur un PDCCH utilisé de manière indépendante par au moins deux cellules (C1, C2), comprenant :
une unité de distribution (2) adaptée pour distribuer un nombre donné (n) de CCE du PDCCH parmi les cellules (C1, C2),
une unité de détermination (3) adaptée pour déterminer un ensemble d'identificateurs de cellule (ID1 de cellule, ID2 de cellule) pour les cellules (C1, C2) en se basant sur un nombre de collisions des ressources physiques avec lesquelles sont mis en correspondance les CCE dans une sous-trame (SF) de liaison descendante du PDCCH, l'emplacement physique des CCE dans la sous-trame (SF) de liaison descendante étant dépendant des identificateurs de cellule (ID1 de cellule, ID2 de cellule), et
une unité d'assignation (4) pour assigner au moins un identificateur de cellule (ID1 de cellule) de l'ensemble déterminé (ID1 de cellule, ID2 de cellule) à au moins l'une des cellules (C1) pour réaliser des transmissions sur le PDCCH,
**caractérisé en ce que**
l'unité de détermination (3) est adaptée pour sélectionner un ensemble d'identificateurs de cellule (ID1 de cellule, ID2 de cellule) qui minimise un nombre de collisions entre des éléments de ressource (RE) dans la sous-trame (SF) qui sont occupés par des CCE ou une autre signalisation de liaison descendante d'au moins deux des cellules (C1, C2), et l'unité d'assignation (4), en se basant sur la distribution des CCE du PDCCH parmi les cellules (C1, C2), est adaptée pour déterminer au moins un identificateur temporaire de réseau radioélectrique, RNTI, pour lequel un nombre élevé d'espaces de recherche de PDCCH est disponible pour le niveau d'agrégation souhaité dans le sous-ensemble d'éléments de canal de commande, CCE, assigné à la première cellule (C1) pendant les sous-trames (SF) d'une trame radioélectrique, RF.

10. Arrangement selon la revendication 9, celui-ci étant mis en oeuvre dans au moins une station de base (BS1), un contrôleur de réseau, une passerelle et une unité d'exploitation et de maintenance d'un réseau radioélectrique (1).

11. Réseau hétérogène (1), comprenant :
une macro cellule (C1) et au moins une cellule de faible puissance (C2), la macro cellule (C1) et ladite cellule de faible puissance (C2) utilisant un PDCCH d'une manière indépendante, et
au moins un arrangement (BS1) selon l'une quelconque des revendications 9 ou 10 pour l'atténuation des interférences sur le PDCCH.
